# EUROPEAN PATENT APPLICATION

(11) **EP 0 844 799 A2**
(43) Date of publication of application: **27.05.1998**
(21) Application number: 97203609.9
(22) Date of filing: 19.11.1997
(51) Int. Cl.: H04Q 7/38, H04Q 7/32, H04Q 3/00, H04Q 7/24

(54) **Integration of manual registration and personal base station registration**

(30) Priority: 22.11.1996 US 755556
(71) Applicant: PACIFIC BELL, San Francisco, CA 94105 (US)
(72) Inventor: Simon, Stephen G., Pleasanton, California 94588 (US)
(74) Representative: Smulders, Theodorus A.H.J., Ir.

(57) **Abstract**

A method for allowing manual registration of a cellular communication unit. The method includes entering a request to manually register the cellular communication unit, and entering registration information, including a routing number corresponding to a wireline telephone. The registration information is entered via a voice-prompt interface. The registration information corresponding to the location of the wireline telephone is stored in a local registration database, and a global registration database is also updated to allow incoming telephone calls to be routed to the wireline telephone corresponding to the routing number in the local registration database. A system for allowing manual registration of a cellular communication unit is also provided.

## Description

### BACKGROUND OF THE INVENTION

### 1. Field of the Invention

This invention relates in general cellular technology registration, and more specifically to a system and method for allowing manual registration of a cellular communication unit in addition to personal base station registration.

### 2. Description of Related Art

Cellular telephone communications systems allow users of cellular telephones to be connected to other cellular telephone users as well as being connected to the conventional landline Public Switched Telephone Network (PSTN). The mobile characteristics of cellular phone technology has made the cellular phone very popular, and very common, in the past few years. However, there may be various reasons for wanting to use a wireline phone rather than a cellular phone where a wireline phone is available. For instance, cellular use charges can be avoided by placing and receiving calls on a nearby wireline phone rather than on the cellular phone.

In order to redirect incoming calls to a cellular phone to a nearby wireline phone, a manual registration technique can be used. Generally, registration is the procedure by which a mobile station identifies itself to a land station as being active. A newly powered on mobile unit searches for the strongest control channel and communicates with that base station. As long as the mobile unit has power, it continues to report its presence to the base station and monitor the control channel. This type of registration is referred to as periodic registration. In another registration technique, the cellular unit is forced to register itself at predefined boundaries in the cellular network. This registration technique is referred to as forced registration.

Other more direct registration techniques have been developed where a specialized Customer Premises Equipment (CPE) device is used in connection with the cellular unit. One such system is disclosed in U.S. Patent Number 5,197,092, issued to Michael Bamburak on March 23, 1993. Bamburak discloses a technique wherein a personal communicator unit, such as a cellular telephone, is received at a personal communicator receiving station. This receiving station is a CPE device which includes a call forwarding number which is forwarded to the network central exchange when the personal communicator unit has been inserted into the receiving station.

Another such CPE device is a Personalized Base Station (PBS). The PBS is designed to be physically positioned in a residence or business and detect the presence of a corresponding cellular handset, which allows the cellular handset to operate in a cordless mode. In this mode, incoming telephone calls are actually being received and originated over the wireline network rather than the cellular network.

However, these systems utilize specialized CPE devices, which increase the cost of the cellular system. Furthermore, in order to utilize such a piece of CPE equipment, the user must be within the vicinity of such a receiving station or PBS in order to utilize the wireline network. It can therefore be seen that there is a need for more location-independent, cost effective, and convenient techniques for manually registering mobile telephones, while still optionally allowing the use of specialized CPE devices such as a PBS.

### SUMMARY OF THE INVENTION

To overcome the limitations in the prior art described above, and to overcome other limitations that will become apparent upon reading and understanding the present specification, the present invention discloses a system and method for allowing manual registration of a cellular communication unit in addition to personal base station registration.

In accordance with one embodiment of the invention, a method for allowing manual registration of a cellular communication unit in addition to personal base station (PBS) registration is provided. The method comprises entering a request to manually register the cellular communication unit. When this request has been accepted, registration information may be entered, the registration information including a routing number corresponding to a wireline telephone. The registration information is entered via a voice-prompt interface, wherein the user is prompted via voice signaling what information to enter and when to enter it. The method further includes storing the registration information corresponding to the location of the wireline telephone in a wireline visiting location register (wVLR), and updating a home location register (HLR) within a cellular communication database. Maintaining the HLR allows incoming telephone calls to be routed to the wireline telephone corresponding to the routing number in the wVLR.

In accordance with another embodiment of the invention, a method for allowing manual registration of a cellular communication unit is provided. The method includes the steps of entering a request to manually register the cellular communication unit. The method includes entering registration information, including a routing number corresponding to a wireline telephone, via a voice-prompt interface to allow a user to enter the registration information from any wireline or wireless telephone. The method further includes integrating the voice-prompt interface and a registration database interface via a messaging protocol. The messaging protocol includes messages from the voice-prompt interface to a local database register to provide the registration information to the local database register within the registration database interface. A global database register is also updated with the registration information to allow incoming calls to be routed to the wireline telephone corresponding to routing number in the local database register.

In accordance with yet another embodiment of the invention, a system for manually registering cellular communication units is provided. The system includes an interactive voice response unit to allow a user to input registration information, including a routing number corresponding to a wireline telephone line. A cellular communication database interface is provided to receive and enter the registration information into a local database register. The information is forwarded to a global database register to allow incoming calls to be routed to the wireline telephone. A common channel signaling (CCS) network, which interfaces the interactive voice response unit and the cellular communication database interface, is also provided. The CCS network forwards the registration information via messaging from the voice-prompt interface to the cellular communication database interface.

These and various other advantages and features of novelty which characterize the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there is illustrated and described specific examples of an apparatus in accordance with the invention.

### BRIEF DESCRIPTION OF THE DRAWINGS

Referring now to the drawings in which like reference numbers represent corresponding parts throughout:
FIG. 1 is a diagram of a typical cellular telephone system;
FIG. 2 is a block diagram illustrating a Personalized Base Station (PBS) registration;
FIG. 3 illustrates one embodiment of a manual registration interface in accordance with the present invention;
FIG. 4 illustrates the message parameters of the *QualDir* message;
FIG. 5 illustrates the message parameters of the *QualReq* message;
FIGS. 6A-6B together comprise a flowchart illustrating the registration process including PBS registration and manual registration in accordance with the present invention;
FIGS. 7A-7B together comprise a flowchart illustrating a more detailed embodiment of the manual registration process in accordance with the present invention.

### DETAILED DESCRIPTION OF THE INVENTION

In the following description of the preferred embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

The present invention provides a system and method for allowing manual registration of a cellular communication unit via a voice-prompt interface.

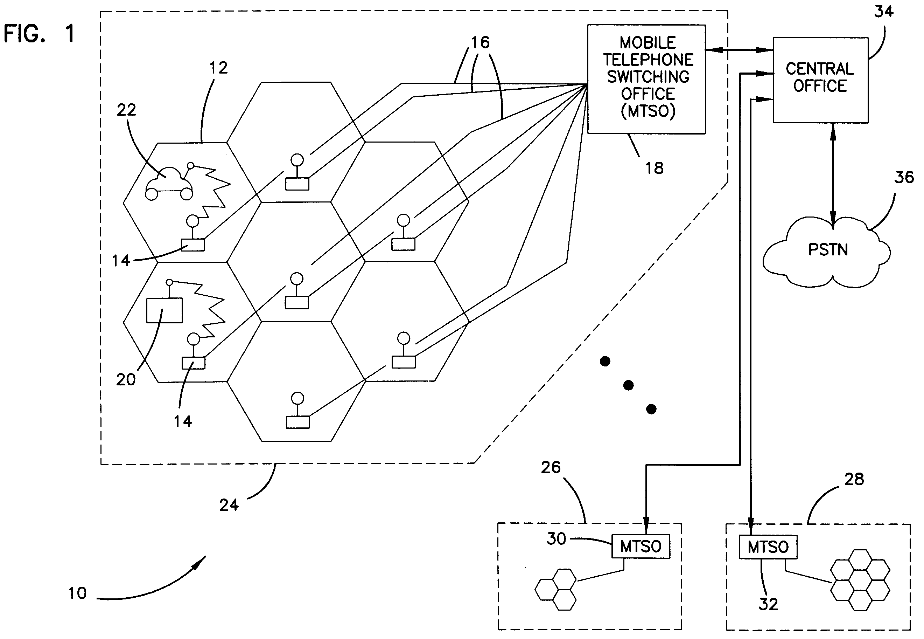

FIG. 1 is a diagram of a typical cellular telephone system 10. Cellular telephones work by dividing geographical areas into 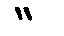 cells*"*. FIG. 1 depicts theoretical cell boundaries creating multiple cells 12. Each cell 12 includes a base station 14, which typically contains a transceiver, antenna, and dedicated lines 16 to a Mobile Telephone Switching Office (MTSO) 18. Adjacent cells 12 utilize different radio frequencies in order to prevent interference between the adjacent cells 12. Therefore, in the seven-cell depiction of FIG. 1, seven different sets of frequency channels will be used, as the center cell 12 is adjacent to each of the surrounding cells 12.

Each cell 12 has at least one setup channel dedicated to signaling between the cell 12 and cellular units within each cell 12, represented by cellular units 20 and 22. Cellular unit 20 represents a generic cellular device, such as a cellular telephone or other device communicating across the wireline and wireless telephone network. The other devices which can communicate across the telephone network include computing devices or computer peripheral devices transmitting and receiving data via modem. Cellular unit 22 represents a cellular telephone installed in an automobile.

The remaining channels other than the setup channel are used for conversation. Each frequency channel may be re-used between cells 12, as long as the re-used channels are not in adjacent cells 12 as previously described, and are far enough apart to avoid excessive interference. A system 10 with a relatively small number of subscribers can therefore use large cells 12, and as demand grows, the cells 12 may be divided into smaller cells.

The MTSO 18 manages the interconnection of the cellular network with the external landline (wireline) telephone network, and also controls the base stations 14 in the cells 12 to manage the switching of calls between the cells 12. The MTSO 18 further tracks which cell 12 each cellular unit is in, so that incoming calls may be directed to the intended recipient cellular unit. The MTSO 18 also records call information for billing purposes.

A cellular telephone 20 consists of a control unit, a transceiver, and antennas (not shown). The transceiver contains circuits that can tune to any of the channels assigned to the cellular system 10. Each cellular telephone 20 has a unique Electronic Serial Number (ESN) assigned by the manufacturer, which is difficult to change, and is typically unknown to the user. Additionally, each cellular telephone 20 is assigned a 10-digit telephone number, known as a Mobile Identification Number (MIN). In a personal communications service (PCS) system, the MIN is often referred to as the PCS number.

The cellular telephone system 10 of FIG. 1 includes multiple service areas, including service areas 24, 26 and 28. Generally, each of the service areas 24, 26 and 28 is controlled by a dedicated MTSO 18, 30 and 32 respectively. Each cellular service area 24, 26 and 28 is uniquely associated with a digital identification called a System Identification (SID). This typically fifteen-bit SID is used by the cellular telephones to identify the home base station within a particular cellular service area, in order to distinguish a home service area from a external service area other than the one from which service is subscribed.

Each of the MTSOs 18, 30 and 32 communicates with a central office 34. The central office 34 is a zone office for a telephone company which can connect callers between each of the MTSOs 18, 30 and 32 and the external wireline network. Where the central office 34 recognizes that a dialed number is a cellular unit number, the central office 34 forwards the call to the appropriate MTSO. The central office 34 is connected to the Public Switched Telephone Network (PSTN) 36, which in turn may be connected to various other telephone networks, both public and private branch exchanges.

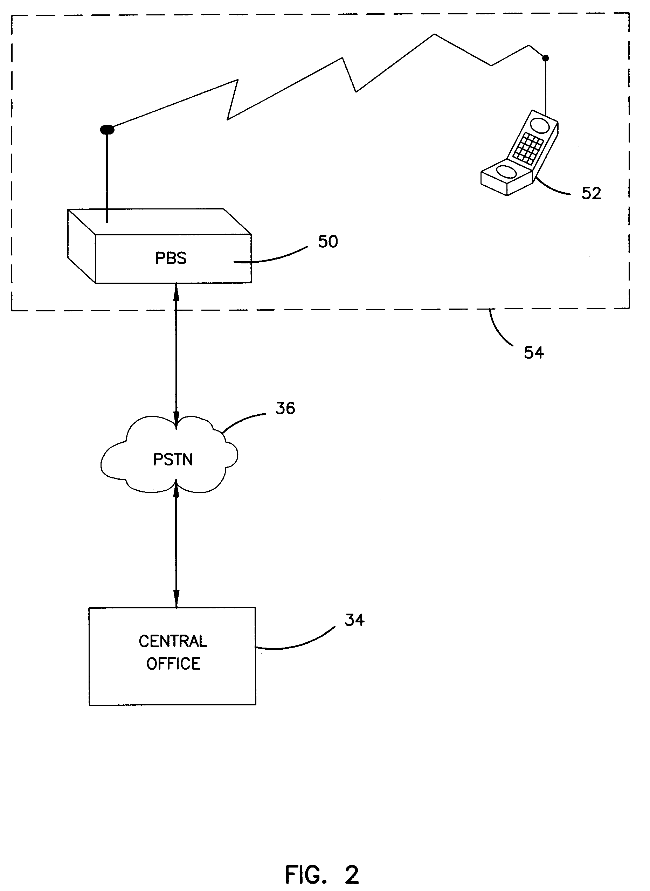

FIG. 2 is a block diagram illustrating a Personalized Base Station (PBS) registration. The present invention provides for a manual registration, while continuing to allow PBS registration.

The PBS 50 is a specialized piece of Customer Premises Equipment (CPE). The PBS 50 is designed to reside in a business or residence and detect the cellular or wireless handset 52 when it is within a certain PBS serving area represented by dashed line 54. The PBS 50 is connected to the central office 34 via the PSTN 36. The PBS 50 allows incoming calls directed to the wireless handset 52 from the PSTN 36 to be redirected to the PBS 50 via the wireline network. The PBS 50 operates as a personal base station coupled to the PSTN 36, and communicates with the wireless handset 52 in a 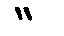 cordless*"* mode. The present invention allows PBS registration to occur, but further allows manual registration where no PBS exists or where the cellular handset 52 is not within the PBS serving area.

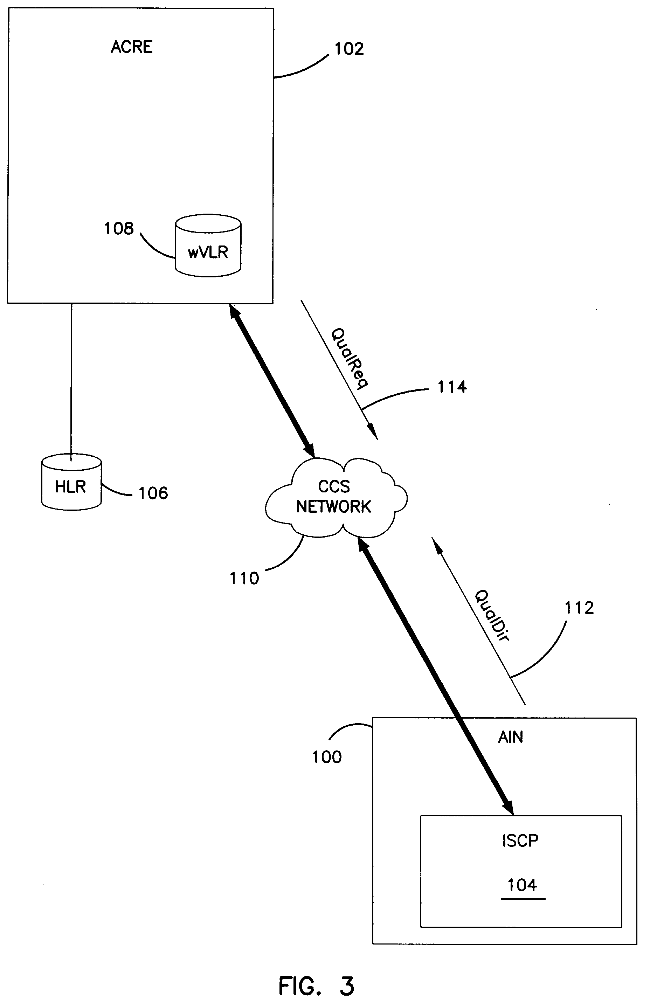

FIG. 3 illustrates one embodiment of a manual registration interface in accordance with the present invention. The invention includes an interface between an Advanced Intelligent Network (AIN) 100 and a special purpose network device implementing an Authentication and Call Routing Equipment (ACRE) 102 interface. This combination enhances the ACRE device 102 to allow manual registrations as well as PBS registrations.

The Advanced Intelligent Network (AIN) 100 has the capability to offer a voice-prompt interface, often referred to as Interactive Voice Response (IVR), or in the present invention an Intelligent Peripheral (IP). An IVR or IP is a system that prompts the user to enter information via Dual Tone Multifrequency (DTMF) dialing, and passes the information to a computing system for processing. Voice announcements typically prompt the user for particular information, and also read back the information entered by the user.

The AIN 100 offers both a protocol and an architecture for the voice-prompt system. Part of the AIN architecture is the Integrated Service Control Point (ISCP) 104 which directs an Intelligent Peripheral (IP) (not shown) to perform the voice-prompt functions. The IP operates analogously to an Interactive Voice Response (IVR) which is known in the art. The IP therefore audibly prompts the user to enter information via Dual Tone Multifrequency (DTMF) dialing. Voice announcements typically prompt the user for particular information, and also read back the information entered by the user.

The ACRE device 102 has the capability to maintain a registration database, labeled the Home Location Register (HLR) 106. The HLR 106 is a centralized database used to track the location of cellular units. A wireline Visitor Location Register (wVLR) 108 associated with the ACRE 102 is notified when the cellular unit is within the corresponding cell. The ACRE 102 updates the HLR 106 to allow the HLR 106 to maintain the location of the cellular unit in any cell of the cellular network.

When a user makes use of a PBS, and the cellular unit is communicating with the PBS, the wVLR 108 is maintained to store the current location of the cellular unit associated with that PBS. The manual registration feature of the present invention allows users to register themselves in this wVLR 108 without having to use the PBS equipment. Therefore, the manual registration feature allows users to make use of the wVLR 108 where the user does not have a PBS, or is not in proximity to the PBS, by tracking the wireline number manually registered by the user.

A different visiting location register typically resides in each serving area within a cellular network. Where manual registration occurs, the wVLR which is used is no longer an active component of the cellular network, but rather is a dedicated database location where the wireline telephone number will be stored. The wVLR that is updated is the visiting location register associated with the "home" serving area. Therefore, when a call is placed to the cellular unit, the home service area is notified as usual. A routing number saved in the home service area wVLR 108 informs the HLR 106 of the wireline number to which to forward incoming calls.

In one embodiment of the invention, the interface between the ISCP 104 and the ACRE 102 takes place over the Common Channel Signaling (CCS) network 110. Common channel signaling is a method of signaling information relating to circuits or functions of network management, and conveyed over a single channel by addressed messages. CCS uses a separate packet-switched network to pass call setup, charging, and supervision information. It can also access the carrier's database to obtain account information such as features and points served on a virtual network.

The standard common channel signaling system adopted by the International Telecommunications Union (ITU) is the Signaling System No. 7 (SS7). SS7 is a common channel signaling protocol used between switching systems, as is known in the art. SS7 has three major components: the Service Switching Point (SSP), the Signaling Transfer Point (STP), and the Service Control Point (SCP). The SSP is a tandem switch in the interexchange network, or an end office in the local exchange carrier network. The STPs are packet-switching nodes, and the SCPs are databases of circuit, routing, and customer information.

The interface over the CCS network 110 makes use of the Interim Standard 41 (IS-41) message set, which is known in the art. IS-41 is a signaling protocol used to control wireless calls. It may be used within a home service area, and also between a roaming service area and the home service area. Other message sets or messaging protocols could be alternatively used without departing from the scope and spirit of the invention.

The present invention utilizes the IS-41 *Qualification_Directive* message (*QualDir*), depicted by line 112, for the registration interaction from the ISCP 104 to the ACRE 102. The IS-41 *Qualification_Request* message (*QualReq*), depicted by line 114, is used for the billing interaction from the ACRE 102 to the ISCP 104.

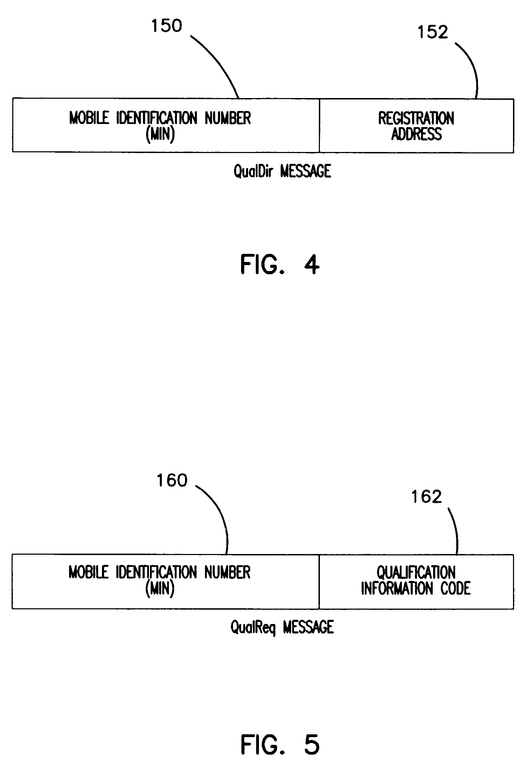

FIGS. 4 and 5 illustrate the message structure of the *QualDir* and *QualReq* messages respectively. Referring now to FIG. 4, the message parameters for the *QualDir* message are shown. The Mobile Identification Number (MIN) parameter 150 will carry the wireless telephone number which is being registered to the ACRE 102. The registration address 152 provides the routing number, or wireline telephone number, to be stored in the wVLR 108. The *QualDir* response message is a simple acknowledgment, with no data fields.

Referring now to FIG. 5, the message parameters for the *QualReq* message are shown. The Mobile Identification Number (MIN) 160 will carry the wireless number for which a registration or routing is being performed, and the Qualification Information Code 162 parameter will be used to indicate which action has taken place, i.e., a registration or a call routing. The *QualReq* response message is a simple acknowledgment with no data fields

Call routing involves an IS-41 *Route_Request* from the home HLR 106 to route to the wVLR 108 associated with the ACRE 102. The ACRE 102 responds with the current routing address as an IS-41 *Route_Request_Return_Result*, and sends an IS-41 *Qualification_Request* message to the ISCP 104 informing it that a call routing event has taken place. This information is used by the ISCP 104 for billing.

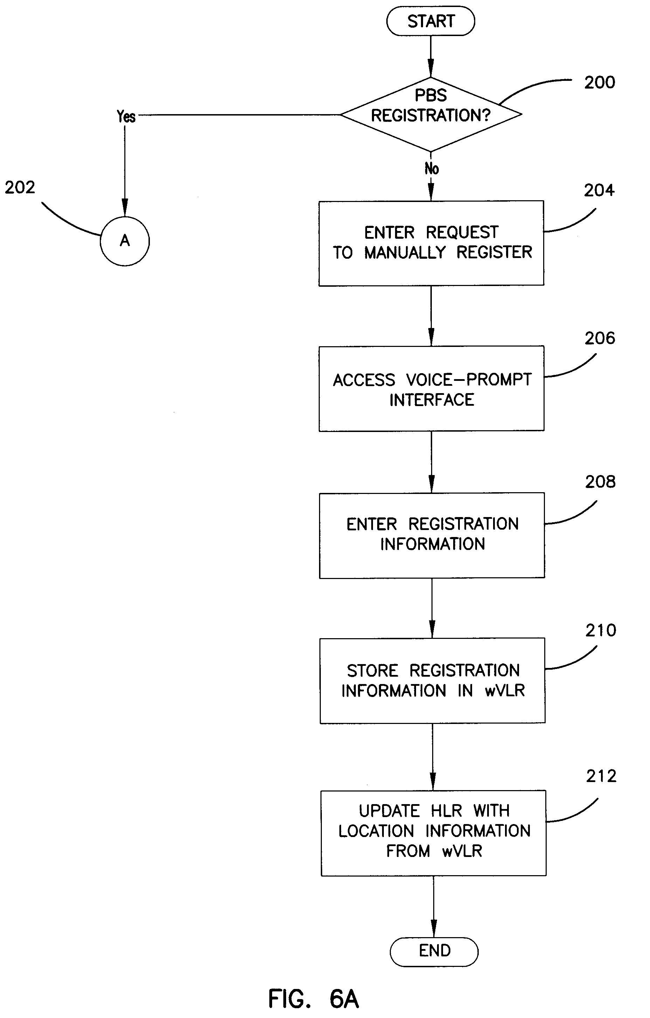

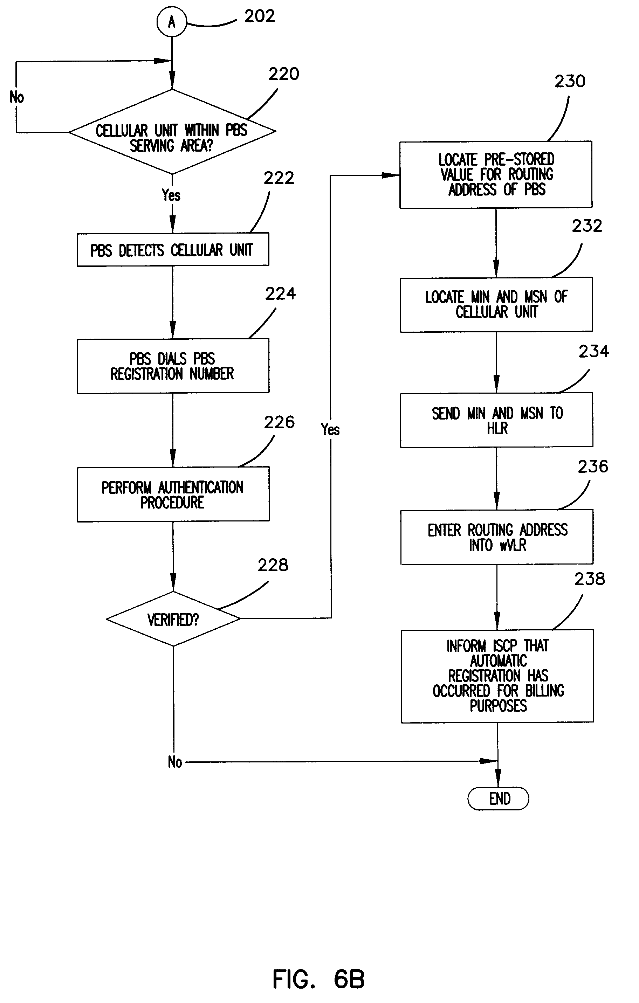

FIGS. 6A-6B together comprise a flowchart illustrating the registration process including PBS registration and manual registration in accordance with the present invention. Because the present invention allows both PBS registration and manual registration, the registration method desired is selected at decision step 200. Where PBS registration is appropriate, control transfers to FIG. 6B via 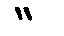 A*"* 202; otherwise control transfers to step 204 in FIG. 6A. Step 204 represents the request for manual registration, where the user initiates the manual registration procedure. Control then transfers to step 206, where the user accesses the voice-prompt interface in order to enter the registration information at step 208. In one embodiment of the invention, this registration information includes the personal communications service (PCS) number, a personal identification number (PIN), and a routing telephone number. For purposes of this invention, the PCS number is synonymous with the MIN, as it identifies the identification number assigned to the wireless communication unit regardless of the frequency band technology. The registration information is stored in the wVLR 108 at step 210, which in turn updates the HLR with the location information as illustrated at step 212.

Where PBS registration is appropriate, control transfers to FIG. 6B via 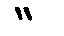 A*"* 202. At decision step 214, the PBS monitors for the presence of the cellular unit within the PBS serving area. If the cellular unit is not within the PBS serving area, the PBS continues to monitor for the presence of the cellular unit, as depicted by the path back to the input of decision step 220. Where the cellular unit is within the PBS serving area, it is detected by the PBS, as shown at step 222. At step 224, the PBS begins the registration process by dialing the dedicated PBS registration number, which is routed to the ACRE 102.

At step 226, an authentication procedure is performed. The ACRE 102 sends the *Connect* message to the PBS, which contains a random authentication value. The PBS performs the authentication procedure and sends a *PB_Authentication* message containing its identifier (PBSID) and the result of the authentication procedure. This message also includes a random authentication value for ACRE 102 authentication. The ACRE 102 performs the authentication procedure, and sends the result to the PBS in an *Authorization_and_Authentication* ACRE message.

Where the authentication procedure is successful as determined at decision step 228, control transfers to step 230, where the ACRE 102 uses the PBS identifier (PBSID) to index an internal table to find the pre-stored values for the routing address of the PBS. The ACRE 102 also uses the PBS identifier to find the MIN and Mobile Serial Number (MSN) of the cellular unit, as shown at step 232. The ACRE 102 sends a *Registration_Notification* (REGNOT message), containing the pre-stored MIN and MSN of the cellular unit to the HLR 106. The HLR 106 responds through the STP with a *Registration_Notification_Acknowledgement* (REGNOT message). The routing address is then entered into the wVLR routing table, as shown at step 236. The PBS terminates the call, and the ACRE sends a *Qualification_Request* (*QualReq*) message to the ISCP 104, informing it that an automatic registration event has taken place, as seen at step 238. This information is used by the ISCP 104 for billing purposes. The ISCP 104 responds with a *Qualification_Request_Return_Result* (*QualReq*), and the process ends.

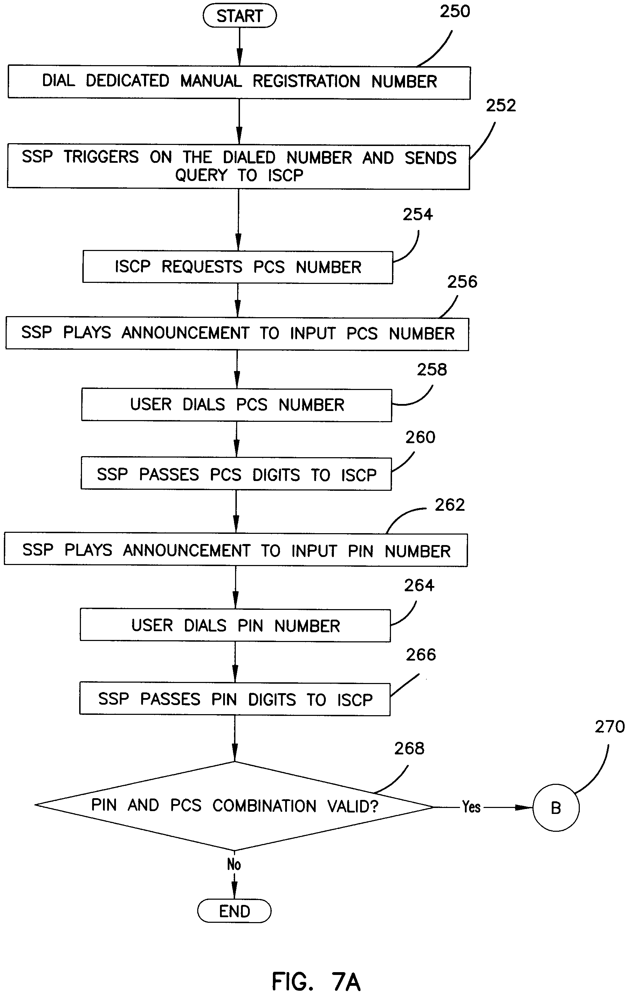

FIGS. 7A-7B together comprise a flowchart illustrating a more detailed embodiment of the manual registration process in accordance with the present invention. A request for manual registration is presented where a dedicated manual registration number is dialed by the user, as seen at step 250. Step 252 indicates that this call is routed to the SSP, which in turn triggers on the dialed number and sends an *info_analyzed* (AIN0.1 Message) to the serving ISCP 104. In accordance with one embodiment of the invention, the SSP includes a ten digit terminating trigger.

Control transfers to step 254, where the user accesses a voice-prompt interface, which is controlled by the ISCP 104. The ISCP 104 sends a *Send_To_Resource* (AIN0.1 Message) request back to the SSP to request the PCS number (also known as the MIN), as illustrated at step 254. At step 256, the SSP plays an announcement to the end user requesting the input of the PCS number via the voice-prompt interface.

At steps 258-268, the user enters various registration information via the voice-prompt interface which is verified. The registration information includes the PCS number, a personal identification number (PIN), and a routing telephone number. The PCS number is dialed by the user at step 258, and the SSP passes the digits to the ISCP 104 in a *Send_To_Resource* (AIN0.1) message, as shown at step 260. The ISCP 104 sends a *Send_To_Resour*ce (AIN0.1 Message) request back to the SSP for the authentication PIN, and the SSP plays an announcement to the user to input the PIN number as depicted at step 262.

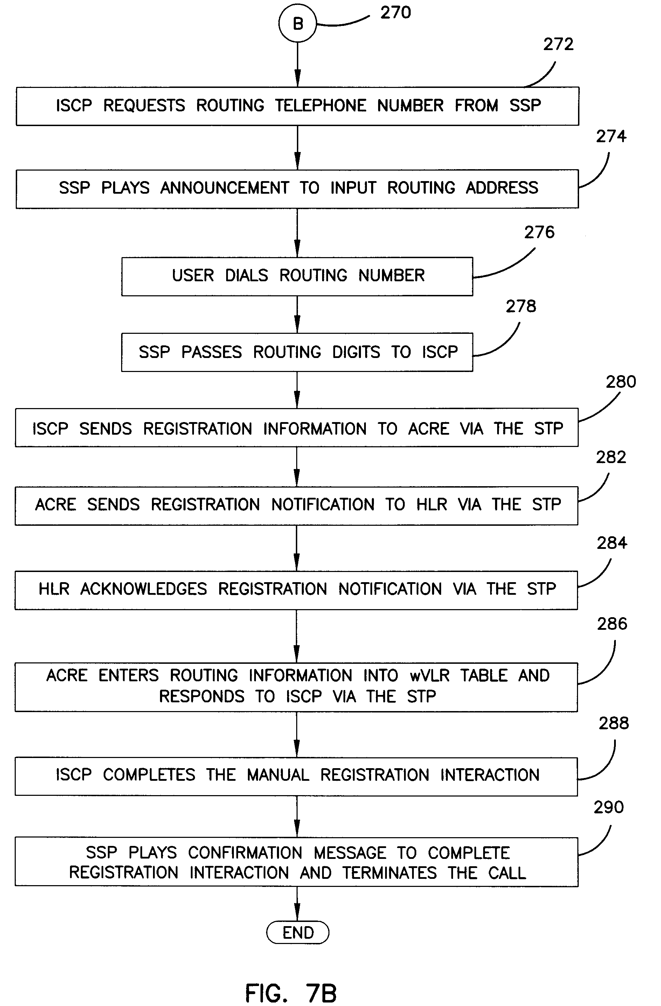

At step 264, the user inputs the PIN number, and the SSP passes the PIN digits to the ISCP 104 at step 266 in a *Send_To_Resource* (AIN0.1) message. At decision step 268, the ISCP 104 determines whether the PIN and PCS number combination is valid, and if it is valid, control transfers to FIG. 7B via 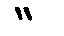 B*"* 270.

Referring now to FIG. 7B, control transfers to step 272 from 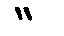 B*"* 270. Step 272 includes sending a *Send_To_Resource* (AIN0.1) request from the ISCP 104 to the SSP for the routing telephone number. At step 274, the SSP plays an announcement to the user requesting the input of the routing telephone number, which the user enters at step 276. At step 278, the SSP passes the routing telephone number digits to the ISCP 104 in a *Send_To_Resource* (AIN0.1) message.

Step 280 includes sending the registration information from the ISCP 104 to the ACRE 102 in a *Qualification_Directiv*e (*QualDir*) message via the STP. The ACRE 102 sends a *Registration_Notification* (REGNOT) message to the HLR 106 via the STP at step 282. Step 284 includes a response by the HLR 106 with a *Registration_Notification_Acknowledgement* (regnot) message, which is also routed by the STP. The ACRE 102 enters the routing information into the wVLR 108 table, and sends a *qualdir* response back to the ISCP 104 via the STP at step 286. The ISCP sends a *Send_To_Resource* message (AIN0.1) back to the SSP instructing it to complete the manual registration interaction, as illustrated at step 288. Finally, at step 290, the SSP plays the confirmation message to the end user to complete the registration interaction, and terminates the call.

The manual registration may be disabled by reactivating the voice-prompt interface to manually disable the manual registration. Alternatively, the manual registration may be disabled by moving the cellular communication unit within the PBS serving area 54, thereby automatically overriding the manual registration by an automatic PBS registration.

Alternatively, the manual registration may be disabled by activating the cellular communication unit with the cellular service area 24, 26, or 28, thereby automatically overriding the manual registration by a normal cellular registration.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. A method for allowing manual registration of a cellular communication unit in addition to personal base station (PBS) registration, comprising the steps of:
(a) entering a request to manually register the cellular communication unit;
(b) entering registration information, including a routing number corresponding to a wireline telephone, via a voice-prompt interface;
(c) storing the registration information corresponding to the location of the wireline telephone in a wireline visiting location register; and
(d) updating a home location register within a cellular communication database to allow incoming telephone calls to be routed to the wireline telephone corresponding to the routing number in the wireline visiting location register.

2. The method of claim 1, further comprising the step of verifying a user's authority to manually register the cellular communication unit.

3. The method of claim 2, wherein the verifying step comprises the step of validating a PCS number entered by the user.

4. The method of claim 3, wherein the verifying step further comprises the step of validating a personal identification number (PIN) entered by the user.

5. The method of claim 1, further comprising the step of integrating the voice-prompt interface and a registration database interface via an addressed messaging technique to provide the registration information as messages from the voice-prompt interface to the wireline visiting location register.

6. The method of claim 5, wherein the step of integrating the voice-prompt interface and the registration database interface comprises the step of providing the messages via common channel signaling (CCS).

7. The method of claim 6, wherein the step of providing the messages via CCS comprises the step of utilizing the signaling system 7 (SS7) signaling protocol.

8. The method of claim 1, wherein the step of entering a request comprises the step of recognizing a dedicated manual registration number dialed by a user.

9. The method of claim 1, wherein the voice-prompt interface audibly prompts a user to enter the registration information via Dual Tone Multifrequency (DTMF) dialing.

10. The method of claim 1, further comprising the step of disabling the manual registration to allow PBS registration.

11. The method of claim 10, wherein the step of disabling the manual registration comprises the step of disabling the manual registration via the voice-prompt interface.

12. The method of claim 10, wherein the step of disabling the manual registration comprises the step of moving the cellular communication unit within a predetermined proximity of the PBS, and automatically overriding the manual registration by an automatic PBS registration.

13. The method of claim 10, wherein the step of disabling the manual registration comprises the step of activating the cellular communication unit with a cellular service area, thereby automatically overriding the manual registration by a normal cellular registration.

14. A method for allowing manual registration of a cellular communication unit, comprising the steps of:
(a) entering a request to manually register the cellular communication unit;
(b) entering registration information, including a routing number corresponding to a wireline telephone, via a voice-prompt interface to allow a user to enter the registration information from any wireline or wireless telephone;
(c) integrating the voice-prompt interface and a registration database interface via a messaging protocol, the messaging protocol including messages from the voice-prompt interface to provide the registration information to a local database register within the registration database interface; and
(d) updating a global database register with the registration information, thereby allowing incoming calls to be routed to the wireline telephone corresponding to routing number in the local database register.

15. The method of claim 14, wherein the voice-prompt interface audibly prompts a user to enter the registration information via Dual Tone Multifrequency (DTMF) dialing.

16. The method of claim 14, wherein the step of integrating the voice-prompt interface and the registration database interface comprises the step of providing the messages via common channel signaling (CCS).

17. The method of claim 16, wherein the step of providing the messages via CCS comprises the step of utilizing the signaling system 7 (SS7) signaling protocol.

18. The method of claim 14, wherein the step of entering a request comprises the step of recognizing a dedicated manual registration number dialed by the user.

19. The method of claim 14, further comprising the step of verifying a user's authority to manually register the cellular communication unit.

20. The method of claim 19, wherein the verifying step comprises the step of validating a PCS number entered by the user.

21. The method of claim 20, wherein the verifying step further comprises the step of validating a personal identification number (PIN) entered by the user.

22. The method of claim 20, wherein the step of disabling the manual registration comprises the step of activating the cellular communication unit with a cellular service area, thereby automatically overriding the manual registration by a normal cellular registration.

23. A system for manually registering cellular communication units, comprising:
an interactive voice response unit to allow a user to input registration information, including a routing number corresponding to a wireline telephone line;
a cellular communication database interface to receive and enter the registration information into a local database register, and to forward the registration information to a global database register to allow incoming calls to be routed to the wireline telephone; and
a common channel signaling (CCS) network, coupled to interface the interactive voice response unit and the cellular communication database interface, to forward the registration information via messaging from the voice-prompt interface to the cellular communication database interface.

24. The system of claim 23, wherein the interactive voice response unit is provided by an Advanced Intelligent Network (AIN).

25. The system of claim 24, wherein the AIN comprises an authenticating circuit to verify the user's authority to manually register the cellular communication unit.

26. The system of claim 23, wherein the interactive voice response unit audibly prompts the user to enter the registration information via Dual Tone Multifrequency (DTMF) dialing.

27. The system of claim 23, further comprising a manual registration initiation circuit having an automatic terminating trigger to initiate the interactive voice response unit upon receiving a dedicated manual registration number dialed by the user.

28. The system of claim 23, further comprising a personal base station (PBS) to allow PBS registration where the cellular communication unit is within a PBS serving area.
